Europäisches Patentamt

European Patent Office

Office européen des brevets

(11) Publication number : **0 473 289 A1**

# EUROPEAN PATENT APPLICATION

(21) Application number : **91306938.1**

(22) Date of filing : **29.07.91**

(51) Int. Cl.⁵ : **A47J 31/40**

(30) Priority : **27.07.90 GB 9016479**

(43) Date of publication of application :
**04.03.92 Bulletin 92/10**

(84) Designated Contracting States :
**AT BE CH DE DK ES FR GB GR IT LI LU NL SE**

(71) Applicant : **WESTOMATIC VENDING SERVICES LIMITED**
**Shaldon Road**
**Newton Abbot, Devon TQ12 4TZ (GB)**

(72) Inventor : **Pritchard, Grant Alexander**
**17 Haywain Close, Edginswell**
**Torquay, Devon TQ12 7SG (GB)**

(74) Representative : **Harrison, Ivor Stanley**
**Withers & Rogers 4 Dyer's Building Holborn**
**London EC1N 2JT (GB)**

(54) **Brewer unit.**

(57)   A brewer unit for a hot drinks dispensing machine includes a brewing cylinder having a pressure-applying piston and into which tea leaf or ground coffee and hot water are introduced, the base of the cylinder being a filter screen. The base and cylinder walls are movable relative to each other between a position of sealing engagement and a spaced-apart position and a wiper arm is positioned externally of the cylinder adjacent to the filter. In use, the piston applies pressure to the cylinder contents while the base and cylinder are in sealing engagement, whereby brewed beverage is forced through the filter, and the cylinder and base then move apart to allow the wiper arm to traverse the filter in the space formed, to remove spent tea leaf or coffee grounds therefrom in readiness for the next brewing cycle.

EP 0 473 289 A1

FIG 1

This invention relates to brewer units for hot beverage dispensing machines, of the type which prepare and dispense a hot beverage such as tea or coffee by contacting heated water with the raw material (tea leaf or ground coffee) to extract the flavour therefrom.

It is already known to provide a brewer unit for dispensing machines of the above type, in which heated water in a chamber is forced under pressure through a filter paper which supports the raw material, the filter paper being supplied in strip form so that, after the beverage has been prepared, the strip may be advanced to present a fresh portion of the strip to the chamber in readiness for the next succeeding dispensing operation and to allow the used portion together with the spent raw material to be discarded.

It is an object of the present invention to provide a brewer unit which avoids the need for filter paper, thereby to reduce running costs and enhance the storage capacity of the machine for spent materials.

According to the invention, a brewer unit for a hot beverage dispensing machine comprises a cylinder having inlet means for heated water and extractable beverage ingredient, the cylinder having a base including a filter element and means for applying pressure to the cylinder contents in use, and means for removing spent extractable ingredient from the surface of the filter element. Preferably, the pressure means and removing means are actuated from a common drive source.

In the use of a machine according to the invention in a dispensing operation, extractable ingredients and heated water are introduced in the cylinder in predetermined or metered quantities to form a mixture of ingredients and beverage with a developing strength and flavour, and the applied pressure forces the beverage through the filter element on which the spent extractable ingredient is retained as a filter cake; the cake is then removed from the filter element surface in readiness for the next succeeding dispensing operation. The beverage is passed through a delivery channel, preferably of minimum capacity to avoid unnecessary cooling and hold-up of the beverage, to a cup or other receptacle.

The spent ingredient is preferably removed by a wiper arm which is constructed and arranged to traverse the filter surface, preferably in an arcuate wiping motion. To this intent, the base may be movable relative to the cylinder between a position of sealing engagement therewith and a position spaced therefrom, the wiper arm being mounted on or adjacent the base outside the position occupied by the cylinder and arranged to traverse the filter surface when the base is spaced from the cylinder to remove spent extractable ingredient therefrom.

The pressure-applying means is preferably a piston which makes sealing engagement with the cylinder walls and which moves relative thereto to pressurize the cylinder contents. Preferably the cylinder is fixedly mounted and the piston is movable, whereby it applies pressure on the down stroke and returns on the up stroke in readiness for the next succeeding dispensing operation. During the initial movement on the pressure stroke, the piston will generally pass the inlet means before beginning to apply pressure, although the inlet means could optionally be independently sealable to allow pressure to be applied throughout substantially the entire down stroke of the piston. Preferably the piston acts indirectly on the cylinder contents, via a cushion, of trapped air; this air becomes heated in use and has a drying effect on the filter cake as the heated air is expelled after the liquid. Desirably, the down stroke of the piston is interrupted to provide a pause for pressure equilibration on either side of the filter element, to prevent the air from causing the final amounts of beverage to splutter on, delivery thereof to the receptacle.

The filter element is preferably a fine-mesh screen having a substantially flat upper surface for efficient removal therefrom of spent ingredient. The screen may be formed from stainless steel or other suitable material. The screen is preferably mounted in the base across an aperture substantially of the same size and shape as the cross section of the cylinder and is bounded by a resilient sealing strip embedded in or otherwise carried by the base, against which the cylinder walls can sealingly engage. The wiper means is preferably a relatively rigid arm which carries a resilient blade, either integrally formed with the arm or separately attached thereto.

A bin or other receptacle may be provided within the machine to receive spend ingredients removed from the filter element.

A complete dispensing cycle is generally automatically controlled and synchronised with other machine functions according to the requirments of the user.

Thus, there may be provision for optional addition of sugar or milk (or substitutes therefor), other beverages which do not require to be formed from extractable ingredients ( such as " instant " coffee or hot chocolate), or cold drinks.

Within the overall machine operation and in a preferred arrangement, the functions of the brewer unit according to the invention are powered by an electric motor via a gear train to effect sequenced operation of the piston, base and wiper means. Thus, initially the base is brought into sealing engagement with the cylinder; the ingredients and heated water are then added to initiate the extraction process; the piston is lowered, following a brief delay of selectable duration, typically of approximately 2 seconds, to allow the extraction process to continue towards completion, sequentially to expel the liquid and entrapped heated air through the filter element, completing the extraction process and partially drying the spent ingredient;

the base is lowered and the wiper means is caused to traverse the filter surface to remove spent ingredient therefrom; and finally the piston is raised. Preferably the motor drives a lay shaft via a reduction gear, the shaft describing a single complete revolution for each dispensing cycle. For example, the piston may be actuated by a connecting rod operatively mounted between the piston rod and a crank gear wheel which rotates through 360° for each cycle. The gear wheel may actuate the reciprocal movement of the base via a profiled cam. The wiper arm, which is preferably mounted at one end thereof on a pivotable shaft to describe an arcuate reciprocal wiping movement, may have a pinion carried on its mounting shaft which engages a rack actuated in a reciprocating manner by a camming arrangement also driven from the lay shaft, whereby the wiper arm is maintained stationary while the cylinder is sealingly engaged with the base and is actuated only when the cylinder and base are spaced apart.

Embodiments of the invention will now be described by way of example with reference to the accompanying drawings, of which

Figure 1 is a diagrammatic cross-sectional view of a brewer unit towards the end of a beverage forming operation,

Figure 2 shows the unit of Figure 1 with the filter element being removed of spent extractable ingredient, and

Figure 3 is a diagrammatic view showing the mechanical arrangement of the brewer unit of Figures 1 and 2.

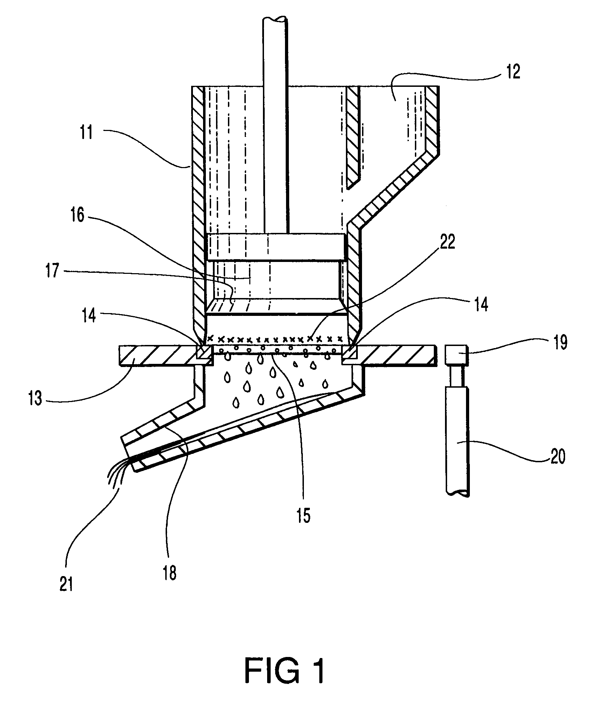

Referring firstly to Figure 1, a brewer unit consists essentially of a cylinder 11 having a hopper 12 for receipt of tea leaf or ground coffee and heated water via a delivery device (not shown). The lower end of the cylinder is in sealing engagement with a base plate 13 via an annular resilient sealing strip 14. The base plate includes a central aperture across which is mounted a filter screen 15 formed from stainless steel. A piston 16 is located within the cylinder and is sealed against the bore thereof by a resilient gasket 17.

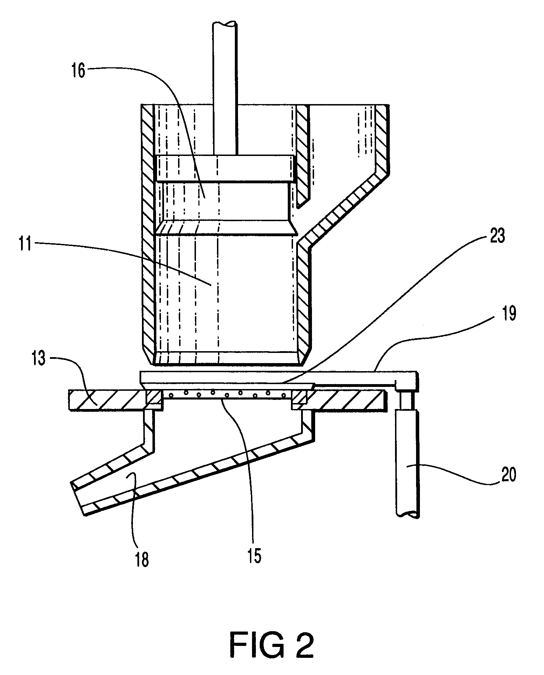

Mounted below the base is a delivery channel and spout 18 for brewed beverage. The base is vertically movable between the position shown in Figure 1 and the Figure 2 position, in which it is spaced from the lower edge of the cylinder. A wiper arm 19 is mounted on an operating rod 20 beside the base.

In use, as shown in Figure 1, the extractable ingredients and heated water have previously been introduced within the cylinder 11 and the piston 16 is pressurizing the contents so that the brewed beverage is being forced through the filter screen 15 and delivered as a stream 21 through the spout 18, spent extractable ingredients being supported as a filter cake 22 on the screen.

As shown in Figure 2, the piston 16 has been partially retracted towards the upper end of the cylinder in readiness for the next cycle and the base plate 13 has been lowered to expose a gap between the filter screen surface and the lower edge of the cylinder. The rod 20 has actuated the wiper arm 19, fitted with a resilient wiper blade 23, to perform an arcuate wiping movement within the gap to remove the spent extractable ingredient 22 from the filter screen to a collection container (not shown). In readiness for the next cycle, the wiper arm will return to the Figure 1 position (orthogonal to the plane of the paper); the base plate will remain spaced from the cylinder until the beginning of the next cycle.

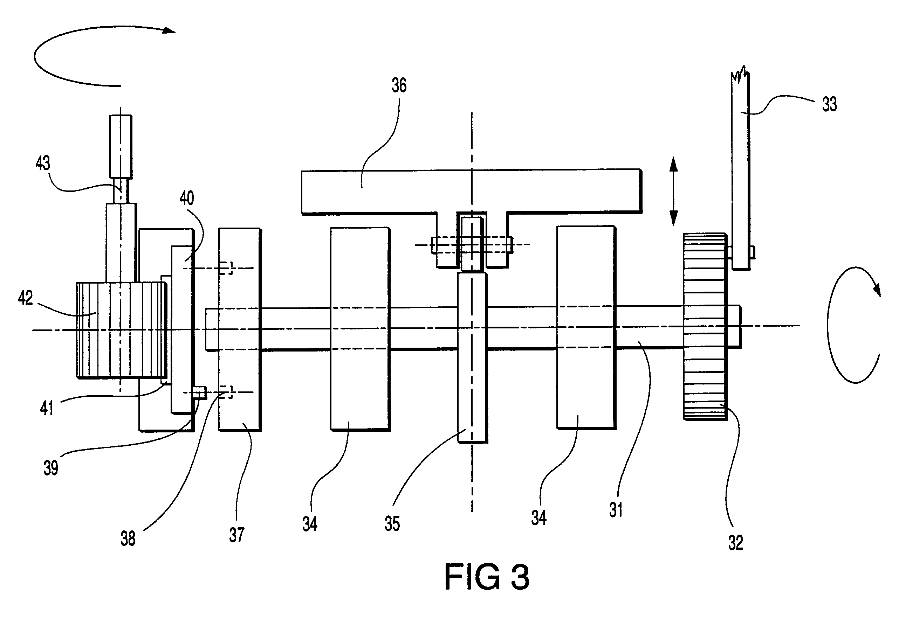

Referring to Figure 3, the layshaft is shown at 31 and is driven by a reduction gear on the motor (not shown) which meshes with the main drive gear wheel 32. The connecting rod 33 to the piston is attached to the gear wheel 32. The layshaft is rotatably carried in bearing blocks 34 between which is an external cam 35. This cam causes the base plate 36 (corresponding to 13 in Figures 1 and 2) to rise and fall as the layshaft rotates.

Attached to the end of the layshaft remote from the gear wheel 32 is an internal cam block 37 containing an ellipsoidal cam groove 38 in which is engaged a cam follower 39 carried by a reciprocally-mounted slide 40. The slide carries a rack 41 which is in engagement with a pinion 42 carried by the wiper shaft 43 (corresponding to shaft 20 in Figures 1 and 2).

In use, the layshaft describes one complete revolution for each dispensing and brewing cycle. The connecting rod 33 includes a pip which actuates a switch at the "home" position, one cycle having been completed and in readiness for the next cycle, and, at the beginning of the next cycle, holds the switch "off" until the base plate is raised into sealing engagement with the lower edge of the cylinder, after which the cycle is under software control. The water and ingredients are then added to the cylinder and the piston descends, after a programmable delay for initiation of the extraction process. Towards the bottom of the piston travel, there is a further programmable delay for pressure equilibration to minimize spluttering. The base plate 36 then falls under the control of the cam 35 and the internal cam 38 causes the slide 40 to move laterally (orthogonally to the plane of the paper), thereby causing the wiper arm to perform an arcuate wiping action to sweep spent ingredients into a suitable waste hopper (not shown). The base plate 36 then preferably drops further so that the filter surface is below the lower edge of the wiper blade, thus avoiding the return arcuate movement of the wiper arm sweeping any residual waste ingredients into the body of the machine.

The profiles of the cams 35 and 38 are designed to have a circular profile where dwells are required, for example to maintain the wiper arm stationary while the piston is descending and until the base plate has dropped. Likewise, the base plate remains stationary during the piston movement and wiper arm movement.

At the completion of the return movement of the wiper arm, the switch is actuated to indicate readiness for the next succeeding cycle.

## Claims

1. A brewer unit for a hot beverage dispensing machine, the brewer unit comprising a cylinder having inlet means for heated water and extractable beverage ingredient, in which the cylinder has a base including a filter element and means for applying pressure to the cylinder contents in use, and means for removing spent extractable ingredient from the surface of the filter element.

2. A brewer unit according to Claim 1, in which the pressure-applying means and removing means are actuated from a common drive source.

3. A brewer unit according to Claim 1 or Claim 2, in which the removing means comprises a wiper arm constructed and arranged to traverse the filter surface.

4. A brewer unit according to Claim 3, in which the wiper arm traverses the filter surface in an arcuate wiping motion.

5. A brewer unit according to any preceding claim, in which the cylinder base is movable relative to the cylinder between a position of sealing engagement therewith and a position spaced therefrom, the removing means being mounted on or adjacent the base externally of the cylinder and arranged to traverse the filter surface when the base is spaced from the cylinder.

6. A brewer unit according to any preceding claim, in which the pressure-applying means comprises a piston which is sealingly engaged with the cylinder walls.

7. A brewer unit according to Claim 6, in which the inlet means opens into the cylinder in the upper portion thereof, whereby the piston on the pressure stroke passes the inlet means before pressure is applied.

8. A brewer unit according to any preceding claim, in which the filter element comprises a fine-mesh screen.

9. A brewer unit according to any preceding claim, in which the pressure-applying means, cylinder-/base and wiping means are connected via a gear train to an electric motor to effect sequenced operation thereof.

10. A brewer unit according to Claim 9, in which the motor drives a lay shaft via a reduction gear and the shaft describes a single complete revolution for each dispensing cycle.

11. A brewer unit according to Claim 10, in which the pressure-applying means comprises a piston actuated by a connecting rod operatively connected between the piston rod and a crank gear wheel which rotates through 360° for each cycle, the gear wheel also actuating reciprocal movement of the base via a profiled cam and the wiper arm is mounted on a pivotable shaft carrying a pinion in engagement with a rack actuated in a reciprocating manner by a camming arrangement also driven by the lay shaft, whereby the wiper arm is maintained stationary while the cylinder is sealingly engaged with the base and is actuated only when the cylinder and base are spaced apart.

# FIG 1

FIG 2

FIG 3

EP 0 473 289 A1

**European Patent Office**

## EUROPEAN SEARCH REPORT

Application Number

EP    91 30 6938

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2 165 140 (FRANKE AG)<br>* page 1, line 80 - page 2, line 93; figures 1-5 * | 1,3-8 | A47J31/40 |
| Y | | 2,9,10 | |
| Y | LU-A-84 645 (LEJEUNE)<br>* page 4, line 26 - page 8, line 10; figures 1-10 * | 2,9,10 | |
| X | CH-A-544 533 (GRUNDSTÜCKSVERWALTUNGSGESELLSCHAFT MÜLLER & CO.)<br>* the whole document * | 1,5-7 | |
| A | US-A-4 230 033 (CUCCIA)<br>* the whole document * | 1-3,9,11 | |

TECHNICAL FIELDS SEARCHED (Int. Cl.5 )

A47J

The present search report has been drawn up for all claims

| Place of search | Date of completion of the search | Examiner |
|---|---|---|
| THE HAGUE | 04 NOVEMBER 1991 | HERYGERS J.J. |

EPO FORM 1503 03.82 (P0401)